**Europäisches Patentamt**

**European Patent Office**

**Office européen des brevets**

(19)

(11) Publication number : **0 368 582 B1**

# (12) EUROPEAN PATENT SPECIFICATION

(45) Date of publication of patent specification :
**21.04.93 Bulletin 93/16**

(51) Int. Cl.⁵ : **B60C 11/11**

(21) Application number : **89311449.6**

(22) Date of filing : **06.11.89**

(54) **Motorcycle tyre.**

(30) Priority : **09.11.88 JP 283287/88**

(43) Date of publication of application :
**16.05.90 Bulletin 90/20**

(45) Publication of the grant of the patent :
**21.04.93 Bulletin 93/16**

(84) Designated Contracting States :
**DE FR GB IT**

(56) References cited :
**GB-A- 2 005 200**
**GB-A- 2 035 924**

(56) References cited :
**PATENT ABSTRACTS OF JAPAN vol. 8, no. 5
(M-267)(1442) 11 January 1984, & JP-A-58
170603 (YOKOHAMA GOMU K.K.) 07 October
1983,
PATENT ABSTRACTS OF JAPAN vol. 7, no.
193 (M-238)(1388) 24 August 1983, & JP-A-58
93609 (YOKOHAMA GOMU K.K.) 03 June 1983,**

(73) Proprietor : **SUMITOMO RUBBER INDUSTRIES
LIMITED**
**1-1 Tsutsuicho 1-chome Chuo-ku**
**Kobe-shi Hyogo-ken (JP)**

(72) Inventor : **Funahara, Kiyoshi**
**1-1-23 Hinokuchicho**
**Nishinomiya-shi Hyogo-ken (JP)**

(74) Representative : **Stewart, Charles Geoffrey**
**SP TYRES UK LIMITED Tyre Technical
Division**
**Fort Dunlop Birmingham B24 9QT (GB)**

EP 0 368 582 B1

## Description

The present invention relates to a tyre for motorcycles which is particularly suitable for use on rough roads and paved roads.

In general, in order to improve traction and to promote discharge of mud or other objects such as pebbles, tyres for off-the-road use have been provided with a block type tread pattern with a high sea/land ratio. Such a tread pattern is, however, noisy when running on a paved road because the blocks collision contact the road surface to generate so called impact noise.

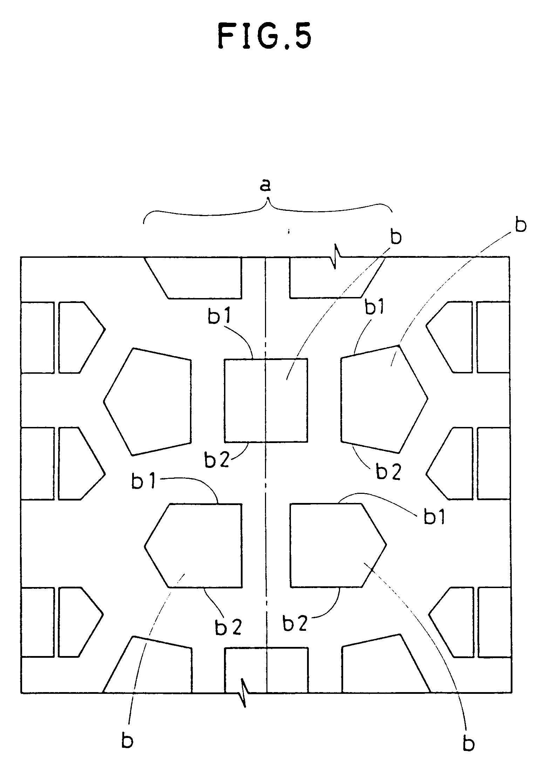

On the other hand, for traction, for example as shown in Fig.5, which corresponds to the preamble of claim 1, it is preferable that the, circumferentially opposed ends or edges b1 and b2 of blocks b which are formed in the ground contacting region a, are parallel to the axial adjacent block edges b1 and b1, or b2 and b2 are aligned which further increases the noise level. It is also preferable to increase the height and axial width of the blocks to improve the traction performance of each block, but this too increases the impact noise and pumping noise.

Thus there is an antinomic relation between traction and low noise.

It is therefore, an object of the present invention to provide a motorcycle tyre in which the noise level is decreased without deteriorating traction.

According to the present invention a tyre is provided for a motorcycle having a tread provided with blocks in at least three axially spaced rows a central row consisting of central blocks arranged circumferentially around the tyre equator and two lateral rows each consisting of lateral blocks arranged circumferentially one on each side of the tyre equator characterised in that the ratio of the circumferential length of each of the centre and lateral blocks to the axial width thereof is more than 1.0 and less than 1.6, and each block has a pair of axially extending and circumferentially opposed edges, the lateral blocks in each lateral row are disposed one between the central blocks in the circumferential direction of the tyre, the axially adjacent lateral blocks are disposed in the circumferential direction of the tyre so that each of the leading and trailing edges of one lateral block are circumferentially displaced from the leading and trailing edges, of the other lateral block by a length of 0.15 to 0.5 times the circumferential length of the lateral blocks, the circumferential distance from the central block to one of the axially adjacent lateral blocks more closely located thereto is more than 8mm and less than 15mm and the sea/land ratio (AS/AL) in the ground contacting region under normal condition is more than 0.3 and less than 0.5.

An embodiment of the present invention will now be described in detail, by way of example only, with reference to the drawings in which:-

Fig.1. is a sectional view showing an embodiment of the present invention

Figs.2 and 3 are plan views showing one block pattern thereof:

Fig.4 is a plan view showing the ground contacting area and Fig.5 is a plan view showing a tread pattern according to prior art.

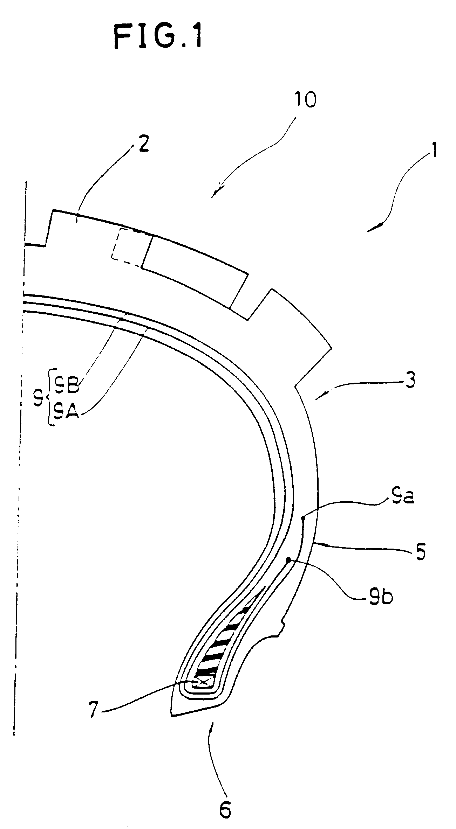

In Fig. 1, a pneumatic tyre for a motorcycle has a tread portion 2 provided with a block pattern, a pair of bead portions 6 and a pair of sidewall portions 5 extending radially inwardly one from each tread edge to the bead portion. The tyre comprises a pair of bead core 7 one disposed in each bead portion, 6 and a toroidal carcass 9 extending between the bead portions 6 through the sidewall portions 5 and the tread portion 2 and turned up at the edges around the bead cores 7. The carcass 9 has at least one ply, in this embodiment, two plies 9A, 9B of cords. The edges of each carcass ply (9A, 9B) are turned up around the bead cores 7 from the axially inside towards the outside and terminate in the bead portions 6 or in the sidewall portions.

The edge 9a of the axially outermost carcass ply turned up part extends over the edge 9b of the inner carcass ply turned up part to cover completely the inward edge 9b. This arrangement mitigates stress concentration around the ply edges.

The carcass 9 is of a cross ply construction, in which the carcass plies 9A, 9B, cross each other, and the ply cords are laid at 30 to 60 degrees with respect to the circumferential direction of the tyre so that the required lateral rigidity of the tyre is provided. For the carcass cords, an organic fibre cord, such as nylon, polyester, rayon, carbon, aromatic polyamide or the like can be used. A rubber tread is disposed radially outside the carcass crown to provide the above-mentioned tread portion 2. In order to maintain camber thrust at a sufficient level even when the motorcycle is steeply tilted, the tread extends from the tyre equator to each side thereof so that the axial width between the tread edges is larger than the maximum tyre section width in the sidewall region, and the tread profile is substantially in parallel with the contour of the carcass crown from the centre of the tread edges.

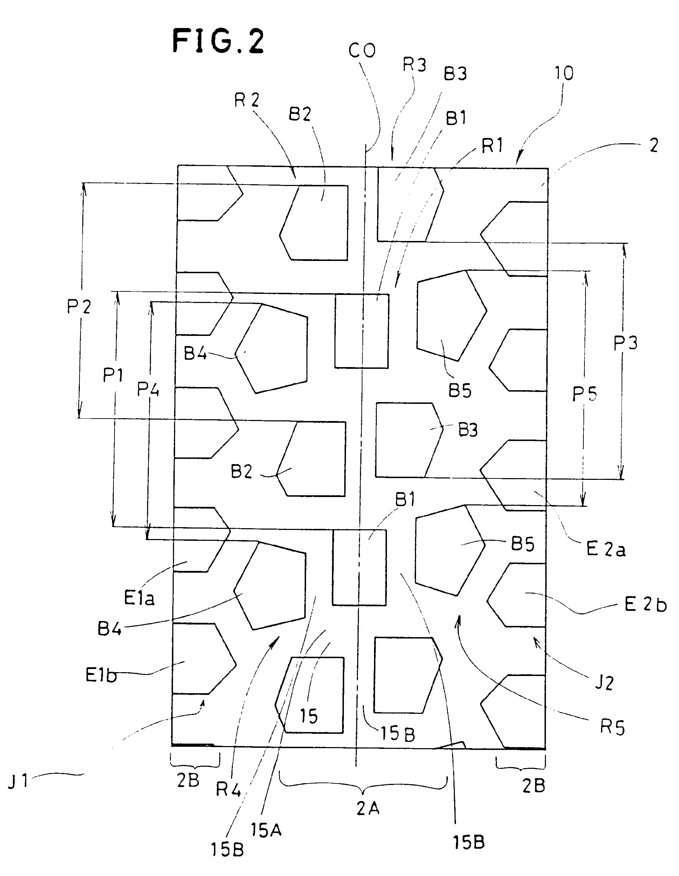

The block pattern 10 is composed of blocks disposed in a crown region 2A of the tread in at least three axially arranged rows R1-E3, in this embodiment, five rows R1-R5, as shown in Fig.2.

Row R1 is composed of central blocks B1 centred substantially on the tyre equator CO, spaced apart circumferentially at a pitch P1.

Row R2 and row R3 are respectively composed of side blocks B2 located on one side (left side in Fig.2) of the tyre equator and side blocks B3 located on the other side (right side) thereof.

Each of the side blocks B2 is positioned circumferentially between the above-mentioned central blocks B1 and successive blocks B2 are spaced at a pitch P2 in the circumferential direction of the tyre. Similarly each of the side blocks B3 is positioned circumferentially between the above mentioned central blocks B1 and successive blocks B3 are spaced at a pitch P3 in the circumferential direction of the tyre so that the blocks B3 face the lateral blocks B2.

Two rows R4 and R5 comprise outer blocks B4 and B5 disposed axially outside the row R2 and at a circumferential pitch P4 and outer blocks B5 being disposed axially outside the row R3 and at a circumferential pitch P5. In the circumferential direction of the tyre, each of the outer blocks is disposed between its associated lateral blocks.

Further, the tread is provided with a row of shoulder blocks in each of the shoulder regions 2B defined axially outward of the crown region 2A. Row J1 located outside the left hand row R4 is composed of two kinds of shoulder blocks E1a and E1b, and one block E1a and one block E1b are arranged between the outer blocks B4. Row J2 located outside the right hand row R5 is composed of two kinds of shoulder blocks E2a and E2b arranged in the same manner as shown in the figures.

As the above mentioned central rows R1 and the two lateral rows R2 and R3 are subjected to higher ground contacting pressure than the remaining outward rows R4, R5, J1 and J2, the influence thereof on traction and noise level is greater, and therefore, the central and lateral rows must be properly arranged.

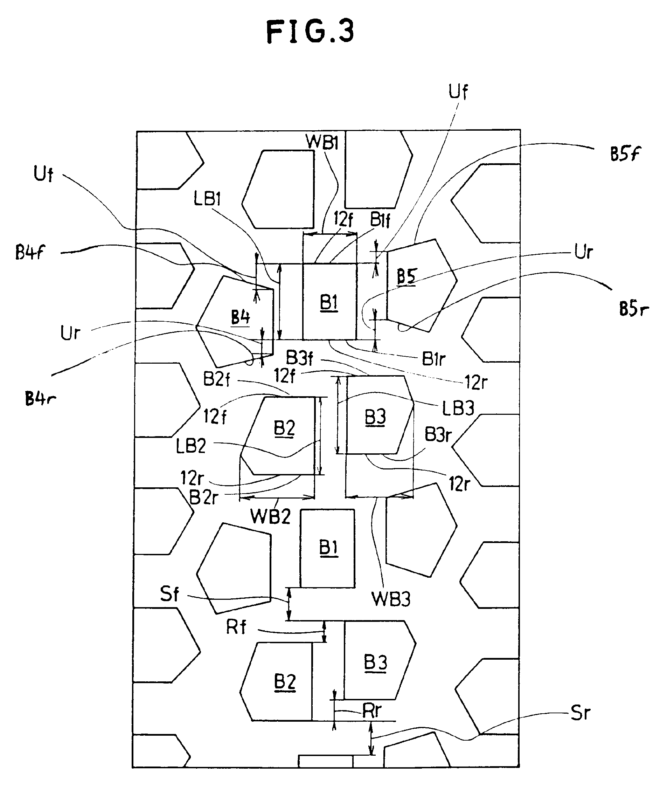

As shown in Fig.3, the central blocks B1 are each formed substantially as rectangles and the lateral blocks B2 and B3 are formed as irregular pentagons in which a triangular lateral portion is formed axially outside a substantially rectangular main portion, the longitudinal axis of which extends in the circumferential direction of the tyre. Therefore, each block (B1, B2 and B3) is provided with circumferentially opposed edges - a leading edge (B1f, B2f, and B3f) and a trailing edge (B1r, B2r and B3r), the inclination of which is less than 3 degrees with respect to the axial direction, so that the blocks can generate strong traction.

Here, the central block B1, lateral block B2 and lateral block B3 are so formed that the circumferential block length is 1.0 to 1.6 times the axial block width, that is, the block length (LB) / block width (WB) ratio LB1/WB1, LB2/WB2 and LB3/WB3 should be 1.0 to 1.6.

If a wider block having a LB/WB ratio less than 1.0 is used then despite more traction, impact noise is increased. In addition, the groove width of the circumferential groove components is decreased, and as the result, the mitigating effect of the groove component on the pumping noise is deteriorated. On the other hand, when the ratios are more than 1.6, traction, drainage and mud discharge are lowered.

To prevent synchronisation of the impacting noise from the blocks B2 with that from the blocks, B3, the lateral blocks B2 and the lateral blocks B3 are circumferentially shifted or staggered so that the leading edges B2f and B3f of the blocks B2 and B3 are displaced by a length Rf, and the trailing edges B2r and B3r of the blocks B2 and B3 are displaced by a length Rr, where the lengths Rf and Rr are between 0.15 to 0.5 times the lateral block length LB2 or LB3. If less than 0.15 times, the synchronisation of impact noise is not satisfactorily prevented. If it is over 0.5 times, traction balance between both sides of the tyre equator is impaired which deteriorates running stability. In order to compensate for a decrease in traction due to this shift, the distance between each central block and the circumferential adjacent lateral block - one located more closely to the central block in the axially adjacent paired lateral blocks - is made more than 8mm and less than 15mm. In this embodiment, therefore, the distance between the leading edge B3f of the lateral block B3 and the trailing edge B1r of the central block B1, and the distance Sr between the leading edge B1f of the central block B1 and the trailing edge B2r of the lateral block B2, are set in the range of 8 to 15mm.

When the distance Sf, Sr is less than 8mm, the traction is greatly decreased, and when it is more than 15mm, the impact noise becomes too large.

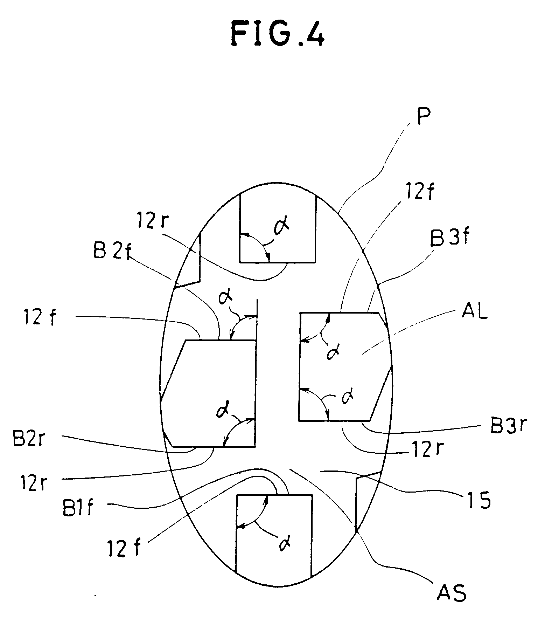

As shown in Fig.4, in a ground contacting area P formed under a normal load in a standard condition where that the tyre is mounted on a regular rim and inflated to a normal pressure, the sea/land ratio AS/AL is set to be more than 0.3 and less than 0.5. Incidentally, the sea/land ratio is the ratio of the grooved areas AS to the remaining area AL. By setting the sea/land ratio in this range, the previously explained limitations can work most effectively.

Similarly, in the outer rows of blocks B4 and B5 in the present embodiment, in order to prevent synchronisation of impact noise generated from the central blocks B1 and the outer blocks B4 and B5 each of the leading edges B4f and B5f thereof is shifted from the leading edge B1f of the axially adjacent central block B1 by a length Uf, and also each of the tailing edges B4r, and B5r is shifted from the edge B1r of the same central block B1 by a length Ur. Preferably, the lengths Uf and Ur are set to be more than 0.15 times and less than 0.5 times the central block length or the lateral block length.

In such a block pattern, the resultant axial groove components 15A and circumferential groove components 15B between the blocks cross each other like a network, which can generate less pumping noise, because the pumping noise generated from the axial groove components is absorbed by the circumferential groove components. To provide such an absorbing effect, the groove width thereof is preferably set about 0.5 times the block width, and at least one circumferential groove component should be connected with the middle of the axial groove component like a letter "T".

Incidentally, the shape and dimension of the blocks and the circumferential pitches can be changed within the above-mentioned limitations. In this embodiment, the blocks have the same shape and same dimension in each row and the pitch is a regular pitch but different shapes, dimensions and/or pitches can be employed in one or more block rows R1-R5. Furthermore, while the above explained carcass has a cross ply construction, a radial ply construction can be employed.

Test tyres of 4.60-18 size having the structure and the tread pattern specified in Table 1 were prepared, and various tests for noise, traction and running stability were made using a drum tester and an actual motorcycle.

The noise test was conducted under a condition 2.0 kg/cm² air pressure and 150kg in load according to the tyre noise test method specified in JASO.0606.

The test tyre was run on a drum installed in an anechoic room and the generated noise was picked up by a microphone set at a point laterally 50cm from the sidewall and upwardly 25cm from the contacting surface.

The noise level was measured at 40km/h, 60km/h and 80 km/h for which the results are given in Table 1.

In the table the noise levels are indicated by an index based on the assumption that the reference tyre 3 having the tread pattern in Fig.5 is regarded as 100, where the lower the value, the better the noise performance.

The traction and the running stability were evaluated by skilled test riders feeling. The results are also shown by an index based on the assumption that the reference tyre 3 or 1 is regarded as 100. the higher the value, the better the performance.

TABLE 1

| | Ex.1 | Ex.2 | Ex.3 | Ref.1 | Ref.2 | Ref.3 |
|---|---|---|---|---|---|---|
| Block / Block length / width | | | | | | |
| LB1/WB1 | 1.5 | 1.1 | 1.43 | 1.0 | 1.6 | 1.0 |
| LB2/WB2 | 1.5 | 1.1 | 1.11 | 1.0 | 1.6 | 0.89 |
| LB3/WB3 | 1.5 | 1.1 | 1.11 | 1.0 | 1.6 | 0.89 |
| $Rf/LB2$ ($LB1=LB3$) | 0.5 | 0.15 | 0.25 | 0.14 | 0.6 | 0 |
| $Rf/LB2$ ($LB2=LB3$) | 0.5 | 0.15 | 0.25 | 0.14 | 0.6 | 6 |
| $Sf$ mm | 8 | 15 | 10 | 16 | 6 | 17 |
| $Sr$ mm | 8 | 15 | 10 | 16 | 6 | 17 |
| Tread Pattern Fig. | 2 | 2 | 2 | 2 | 2 | 3 |
| Noise Level | | | | | | |
| @ 40km/H | 91 | 96 | 93 | 100 | 90 | 100 |
| @ 60km/H | 90 | 95 | 92 | 98 | 90 | 100 |
| @ 80km/H | 90 | 94 | 91 | 99 | 90 | 100 |
| Traction | 101 | 105 | 101 | 100 | 87 | 100 |
| Running Stability | 97 | 110 | 100 | 90 | 90 | 90 |

As apparent from the test results, the working example tyres 1-3 according to the present invention are superior in noise level, traction and running stability performance to the reference tyres 1-3.

As described above, in the motorcycle tyre according to the present invention, as the edges of the central blocks and lateral blocks are shifted with respect to each other in the circumferential direction is a specified manner, synchronisation of the impact noises generated from the edges when contacting the ground is prevented without deteriorating the traction performance. Thus, the traction performance and low noise performance are coincidentally improved.

**Claims**

1. A tyre for a motorcycle having a tread (2) provided with blocks (B1, B2, B3) in at least three axially spaced rows (R1, R2, & R3) a central row (R1) consisting of central blocks (B1) arranged circumferentially around the tyre equator (CO) and two lateral rows (R2 & R3) each consisting of lateral blocks arranged circumferentially one on each side of the tyre equator (CO) characterised in that the ratio of the circumferential length (LB1, LB2 & LB3) of each of the centre (B1) and lateral blocks (B2, B3) to the axial width (WB1, WB2, WB3) thereof is more than 1.0 and less than 1.6, and each block (B1, B2, B3) has a pair of axially extending and circumferentially opposed edges (B1f, B2f, B3f, B1r, B2r & B3r), the lateral blocks (B2 & B3) in each lateral row (R2 & R3) are disposed between the central blocks (B1) in the circumferential direction of the tyre, the axially adjacent lateral blocks (B2, B3) are disposed in the circumferential direction of the tyre so that each of the leading and trailing edges (B2f, B2r) of one lateral block (B2) are circumferentially displaced from the leading and trailing edges (B3f, B3r) of the other lateral block (B3) by a length (Rf, Rr) of 0.15 to 0.5 times the circumferential length of the lateral blocks, the circumferential distance (Sf, Sr) from the central block to one of the axially adjacent lateral blocks more closely located thereto is more than 8mm and less than 15mm and the sea/land ratio (AS/AL) in the ground contacting region under normal condition is more than 0.3 and less than 0.5.

2. A tyre according to claim 1 characterised in that the axially extending edges (B1f, B2f, B3f, B1r, B2r, B3r) of the blocks are laid at an angle not more than 3 degrees to the axial direction of the tyre.

**Patentansprüche**

1. Reifen für ein Motorrad mit einer Lauffläche (2), die mit Blöcken (B1, B2, B3) in wenigstens drei axial beabstandeten Reihen (R1, R2 & R3) versehen ist, eine zentrale Reihe (R1), die aus zentralen Blöcken (B1) besteht, die umfänglich um den Reifenäquator (CO) angeordnet sind, und zwei seitliche Reihen (R2 & R3), von denen jede aus seitlichen Blöcken besteht, die umfänglich, jeweils einer an jeder Seite des Reifenäquators (CO) angeordnet sind,
dadurch **gekennzeichnet,**
daß das Verhältnis der umfänglichen Länge (LB1, LB2 & LB3) jedes der zentralen (B1) und seitlichen Blöcke (B2, B3) zur axialen Breite (WB1, WB2, WB3) davon mehr als 1,0 und weniger als 1,6 beträgt, und jeder Block (B1, B2, B3) ein Paar von sich axial erstreckenden und umfänglich entgegengesetzten Rändern (B1f, B2f, B3f, B1r, B2r & B3r) besitzt, die seitlichen Blöcke (B2 & B3) in jeder seitlichen Reihe (R2 & R3) zwischen den zentralen Blöcken (B1) in der Umfangsrichtung des Reifens angeordnet sind, die axial benachbarten seitlichen Blöcke (B2, B3) in der Umfangsrichtung des Reifens angeordnet sind, so daß jeder der vorderen und hinteren Ränder (B2f, B2r) eines seitlichen Blockes (B2) umfänglich von den vorderen und hinteren Rändern (B3f, B3r) des anderen seitlichen Blockes (B3) durch eine Länge (Rf, Rr) von 0,15 bis 0,5 mal der umfänglichen Länge der seitlichen Blöcke versetzt wird, der umfängliche Abstand (Sf, Sr) vom zentralen Block zu einem der axial benachbarten seitlichen Blöcke, die sich näher daran befinden, mehr als 8 mm und weniger als 15 mm beträgt, und das See/Land Verhältnis (AS/AL) im Bodenkontaktbereich unter normalen Bedingungen mehr als 0,3 und weniger als 0,5 beträgt.

2. Reifen nach Anspruch 1,
dadurch **gekennzeichnet,**
daß die sich axial erstreckenden Ränder (B1f, B2f, B3f, B1r, B2r, B3r) der Blöcke in einem Winkel von nicht mehr als 3 Grad zur axialen Richtung des Reifens angeordnet sind.

**Revendications**

1. Pneumatique de motocyclette ayant une bande de roulement (2) comportant des blocs (B1, B2, B3) dans au moins trois lignes axialement espacées (R1, R2 et R3), une ligne centrale (R1) étant formée de blocs centraux (B1) disposés circonférentiellement autour de l'équateur (CO) du pneumatique et deux lignes latérales (R2 et R3) comprenant chacune des blocs latéraux disposés circonférentiellement, d'un côté de l'équateur (CO) du pneumatique, caractérisé en ce que le rapport de la longueur circonférentielle (LB1, LB2 et LB3) de chacun des blocs centraux (B1) et latéraux (B2, B3) à la largeur axiale (WB1, WB2, WB3) du bloc est supérieur à 1,0 et inférieur à 1,6, et chaque bloc (B1, B2, B3) a une paire de blocs disposés axialement et opposés circonférentiellement (B1f, B2f, B3f, B1r, B2r et B3r), les blocs latéraux (B2 et B3) de chaque ligne latérale (R2 et R3) sont disposés entre les blocs centraux (B1) dans la direction circonférentielle du pneumatique, des blocs latéraux axialement adjacents (B2, B3) sont disposés dans la direction circonférentielle du pneumatique de manière que chacun des bords avant et arrière (B2f, B2r) d'un bloc latéral (B2) soit décalé circonférentiellement par rapport aux bords avant et arrière (B3f, B3r) de l'autre bloc latéral (B3) d'une longueur (Rf, Rr) comprise entre 0,15 et 0,5 fois la longueur circonférentielle des blocs latéraux, la distance circonférentielle (Sf, Sr) du bloc central à celui des blocs latéraux axialement adjacents qui est placé le plus près étant supérieure à 8 mm et inférieure à 15 mm, et le rapport des creux aux saillies (AS/AL) dans la région de contact avec le sol dans les conditions normales est supérieur à 0,3 et inférieur à 0,5.

2. Pneumatique selon la revendication 1, caractérisé en ce que les bords disposés axialement (B1f, B2f, B3f, B1r, B2r, B3r) des blocs forment un angle qui ne dépasse pas 3° avec la direction axiale du pneumatique.

EP 0 368 582 B1

# FIG.1

# FIG.2

# FIG.3

# FIG.4

# FIG.5